# EUROPÄISCHE PATENTANMELDUNG

(11) **EP 4 275 838 A1**
(43) Veröffentlichungstag der Anmeldung: **15.11.2023**
(21) Anmeldenummer: 23171574.9
(22) Anmeldetag: 04.05.2023
(51) Int. Cl.: B23Q 3/155

(54) **BESTÜCKUNGSVORRICHTUNG, WERKZEUGMASCHINE UND VERFAHREN ZUM EINSCHLEUSEN ODER AUSSCHLEUSEN VON WERKZEUGEN**

(30) Priorität: 09.05.2022 DE 102022111480
(71) Anmelder: CHIRON Group SE, 78532 Tuttlingen (DE)
(72) Erfinder: Eble, Michael, 78567 Fridingen (DE); Raffke, Karl-Heinz, 78554 Aldingen (DE); Eppler, Claus, 72469 Meßstetten (DE)
(74) Vertreter: Witte, Weller & Partner Patentanwälte mbB

(57) **Zusammenfassung**

Eine Bestückungsvorrichtung (70) für eine Werkzeugmaschine (10) umfasst ein Werkzeugshuttle (90), das zwischen einer ersten Übergabeposition (94) und einer zweiten Übergabeposition (96) verfahrbar ist, einen Bereitstellungsplatz (144) zur Einbringung oder Entnahme eines Werkzeugs (66), und eine dem Werkzeugshuttle (90) zugeordnete Werkzeugmitnahmeeinheit (120) mit zumindest einem Greifmechanismus (190), der dazu ausgebildet ist, ein zu transferierendes Werkzeug (66) zu greifen und am Werkzeugshuttle (90) zu sichern. Der Bereitstellungsplatz (144) ist für das Werkzeugshuttle (90) in der ersten Übergabeposition (94) erreichbar. Das Werkzeugshuttle (90) ist dazu ausgebildet, ein Werkzeug (66) zwischen dem Bereitstellungsplatz (144) und einem Magazinplatz (64) eines Werkzeugmagazins (60) auszutauschen. Der Magazinplatz (64) ist für das Werkzeugshuttle (90) in der zweiten Übergabeposition (96) erreichbar. Der Greifmechanismus (190) weist ein relativ zu einem Grundkörper (102) des Werkzeugshuttles (90) verfahrbares Führungselement (198) und ein relativ zum Führungselement (198) verfahrbares Sicherungselement (208) auf, wobei zumindest das Führungselement (198) parallel zu einer Längsachse (130) des Werkzeugs (66) verfahrbar ist. Eine Werkzeugmaschine (10) und ein Verfahren zum Werkzeugwechsel nutzen eine solche Bestückungsvorrichtung (70).

## Beschreibung

Die vorliegende Offenbarung betrifft eine Bestückungsvorrichtung für Werkzeuge, eine mit einer solchen Bestückungsvorrichtung versehene Werkzeugmaschine, sowie ein Verfahren zum Einschleusen oder Ausschleusen von Werkzeugen für eine Werkzeugmaschine.

Aus der DE 102 36 342 A1 ist eine Einrichtung zur Bestückung eines vertikal orientierten Kettenmagazins bekannt, das zur Aufnahme horizontal orientierter Werkzeuge ausgebildet ist. Die Bestückungseinrichtung umfasst einen Schwenkantrieb, der Werkzeuge zwischen einer von außen zugänglichen Bestückungsposition und einer Zwischenposition transferiert. Ferner ist eine Transporteinrichtung vorgesehen, die Werkzeuge zwischen der Zwischenposition und dem Kettenmagazin transferiert.

Aus der WO 2014/048707 A1 ist ein Überführungsgreifer für den Transfer eines vertikal orientierten Werkzeugs zwischen zwei Positionen bekannt, beispielsweise zur Bestückung eines Werkzeugmagazins oder zum Transfer eines Werkzeugs zwischen zwei Werkzeugmagazinen. Der Überführungsgreifer ist dazu ausgebildet, einen Werkzeugschaft innen zu greifen, wobei zu diesem Zweck zwei einander gegenüberliegende, schräg orientierte Finger vorgesehen sind, die in einem Eingriffszustand eine durch eine Schulter gebildete Hinterschneidung im Werkzeugschaft hintergreifen können. Die beiden Finger sind an einander gegenüberliegenden Balken angeordnet, die über schräg gestellte Führungen in Bezug auf das Werkzeug gegenläufig verfahrbar sind. Die beiden Finger sind jeweils in einer Ebene verfahrbar, die unter einem Winkel von etwa 45° bis 50° gegenüber einer Längsachse des Werkzeugs orientiert ist.

Aus der DE 10 2018 122 165 A1 ist ein Wechselspeicher für Werkzeuge bekannt, der einen Werkzeugspeicher zur Aufnahme einer Mehrzahl von Werkzeugen und einen Werkzeugwechsler aufweist, mit dem Werkzeug in eine Werkzeugspindel eingewechselt werden können. Ferner ist eine Werkzeugverlagerungseinrichtung vorgesehen, mit der Werkzeuge zwischen dem Werkzeugspeicher und dem Werkzeugwechsler transferiert werden können. Die Werkzeugverlagerungseinrichtung ermöglicht eine vertikale Entnahmebewegung und Einführbewegung für die Werkzeuge.

Die DE 10 2009 041 075 A1, die DE 87 16 086 U1, die DE 40 33 036 A1 und die US 11 311 977 B2 zeigen Gestaltungen von Werkzeugtransfereinrichtungen mit Werkzeugshuttles. Aus der DE 20 2007 016 375 U1 ist ein Greifmechanismus zum Greifen von Werkzeugen an deren Kegelfläche bekannt.

Die Handhabung von Werkzeugen spielt bei der Automatisierung von Werkzeugmaschinen eine große Rolle. Ein automatischer Werkzeugwechsel vergrößert das Anwendungsspektrum der Werkzeugmaschine. Werkstücke können in einer Aufspannung umfangreich (idealerweise komplett) bearbeitet werden. Ferner erlaubt ein automatischer Werkzeugwechsel den Austausch verschleißbehafteter Werkzeuge, ohne dass es zu größeren Produktivitätseinbußen kommt.

Werkzeugaufnahmen dienen üblicherweise zum Einspannen eines Werkzeugs in einen Werkzeughalter, beispielsweise einen Werkzeughalter einer Werkzeugspindel. Werkzeugaufnahmen sind üblicherweise konisch gestaltet, beispielsweise als Hohlschaftkegel (HSK). Zur Bereitstellung einer Mehrzahl von Werkzeugen für eine Werkzeugmaschine sind üblicherweise Werkzeugmagazine vorgesehen, die eine Mehrzahl von Magazinplätzen für Werkzeuge aufweisen.

Werkzeuge weisen üblicherweise Handhabungsabschnitte auf, beispielsweise eine Handhabungsnut an einem Außenumfang eines Werkzeugschafts. Über die Handhabungsnut kann ein Werkzeug beispielsweise durch einen Greifer gehalten und bewegt werden. Über die Handhabungsnut kann ein Werkzeug ferner in einem Magazinplatz in der Aufnahmenut sitzen. In einem solchen Fall ist die Handhabungsnut nicht mehr für andere Handhabungseinheiten nutzbar.

Es hat sich gezeigt, dass die manuelle Bestückung von Werkzeugmagazinen, insbesondere von Kettenmagazinen, zuweilen mit erhöhtem Aufwand für einen Bediener einhergeht. Dies bezieht sich beispielsweise auf eine korrekte Ausrichtung (axiale Orientierung, Drehorientierung) des Werkzeugs in Bezug auf einen Magazinplatz. Insbesondere bei verhältnismäßig großen Werkzeugen mit großen Schaftabmessungen kommt das nicht unerhebliche Eigengewicht des Werkzeugs hinzu. Beispielsweise ist die Handhabung von Werkzeugen mit einem sogenannten HSK-100 (zum Beispiel HSK-A 100) Hohlschaftkegel schon deshalb erschwert, weil allein der Schaft (ohne Werkzeugabschnitt) mehrere Kilogramm wiegt. Ein Werkzeug mit HSK-A 100 Schnittstelle kann ein Gewicht von über 20 kg aufweisen.

Werkzeuge mit durchmessergroßem Schaft eignen sich naturgemäß zur Übertragung hoher Drehmomente. Folglich lässt sich damit eine hohe Abtragsleistung erzielen. Die Abmessungen und das Gewicht solcher Werkzeuge müssen natürlich bei der Handhabung und Bevorratung berücksichtigt werden.

Es besteht weiterhin ein Bedarf an Automatisierungslösungen zur Bereitstellung von Werkzeugen für Werkzeugmaschinen, insbesondere in Zusammenhang mit der Bestückung von Werkzeugmagazinen.

Vor diesem Hintergrund liegt der vorliegenden Offenbarung die Aufgabe zugrunde, eine Bestückungsvorrichtung für eine Werkzeugmaschine, insbesondere für ein Werkzeugmagazin einer Werkzeugmaschine, anzugeben, die das Einschleusen und Ausschleusen von Werkzeugen vereinfacht. Insbesondere soll die Bestückungsvorrichtung als Schnittstelle zwischen der Werkzeugmaschine und der Umgebung dienen. Insbesondere soll die Bestückungsvorrichtung das Einschleusen und Ausschleusen schwerer Werkzeuge vereinfachen. Insbesondere soll die Bestückungsvorrichtung für eine manuelle Beschickung durch einen Bediener geeignet sein.

Schließlich soll im Rahmen der vorliegenden Offenbarung eine mit einer solchen Bestückungsvorrichtung versehene Werkzeugmaschine angegeben werden. Ferner soll ein einschlägiges Verfahren zum Einschleusen oder Ausschleusen von Werkzeugen bei einer Werkzeugmaschine angegeben werden.

Gemäß einem ersten Aspekt bezieht sich die vorliegende Offenbarung auf eine Bestückungsvorrichtung für eine Werkzeugmaschine, insbesondere für ein Werkzeugmagazin einer Werkzeugmaschine, wobei die Bestückungsvorrichtung Folgendes aufweist:
- ein Werkzeugshuttle, das zwischen einer ersten Übergabeposition und einer zweiten Übergabeposition verfahrbar ist,
- einen Bereitstellungsplatz, insbesondere einen von außen zugänglichen Bereitstellungsplatz, zur Einbringung oder Entnahme eines Werkzeugs, wobei der Bereitstellungsplatz für das Werkzeugshuttle in der ersten Übergabeposition erreichbar ist,
   wobei das Werkzeugshuttle dazu ausgebildet ist, ein Werkzeug zwischen dem Bereitstellungsplatz und einem Magazinplatz eines Werkzeugmagazins auszutausehen, wobei der Magazinplatz für das Werkzeugshuttle in der zweiten Übergabeposition erreichbar ist, und
- eine dem Werkzeugshuttle zugeordnete Werkzeugmitnahmeeinheit mit zumindest einem Greifmechanismus, der dazu ausgebildet ist, ein zu transferierendes Werkzeug zu greifen und am Werkzeugshuttle zu sichern,
   wobei der Greifmechanismus ein relativ zu einem Grundkörper des Werkzeugshuttles verfahrbares Führungselement und ein relativ zum Führungselement verfahrbares Sicherungselement aufweist, und
   wobei zumindest das Führungselement parallel zu einer Längsachse des Werkzeugs verfahrbar ist.

Die Bestückungsvorrichtung dient beispielsweise zur Beschickung eines Werkzeugmagazins. Die Bestückungsvorrichtung wird üblicherweise nicht für einen direkten Transfer eines Werkzeugs zwischen dem Bereitstellungsplatz und einer Werkzeugspindel verwendet. Stattdessen ist die Bestückungsvorrichtung beispielsweise in einem hinteren Maschinenbereich (beispielsweise Beschickungsseite) angeordnet und erlaubt dort das Einschleusen oder Ausschleusen von Werkzeugen in zumindest ein Werkzeugmagazin der Werkzeugmaschine. Die Bestückungsvorrichtung kann Werkzeuge mit dem Werkzeugshuttle zwischen der ersten Übergabeposition und der zweiten Übergabeposition transferieren. Es können also neue Werkzeuge in ein Werkzeugmagazin eingeschleust werden. Es können jedoch auch (zum Beispiel benutzte oder verschlissene) Werkzeuge aus dem Werkzeugmagazin ausgeschleust werden.

Zumindest das Führungselement ist parallel zur Längsachse des Werkzeugs verfahrbar. Beispielhaft ist das Führungselement entlang der Längsachse des Werkzeugs verfahrbar, um das Werkzeug zu greifen oder freizugeben. In einer beispielhaften Ausgestaltung sind sowohl das Führungselement als auch das Sicherungselement parallel zur Längsachse, insbesondere entlang der Längsachse, des Werkzeugs verfahrbar.

Das Werkzeugmagazin ist als Kettenmagazin gestaltet, zumindest in beispielhaften Ausgestaltungen. In einer beispielhaften Ausgestaltung dient das Kettenmagazin zur Bereitstellung von Werkzeugen, die direkt zwischen dem Kettenmagazin und der Werkzeugspindel austauschbar sind, beispielsweise gemäß einem sogenannten Pick-Up-Verfahren, bei dem sich die Werkzeugspindel mit ihrem Werkzeughalter Werkzeuge von einer Übergabeposition abholt oder dort absetzen kann.

In beispielhaften Ausgestaltungen sind die Werkzeuge zumindest im Werkzeugmagazin und im Werkzeugshuttle hängend orientiert. Die Längsachse der Werkzeuge ist bei einer solchen Ausgestaltung vertikal orientiert. Üblicherweise ist bei dieser Ausgestaltung ein Wirkbereich (zum Beispiel Schneide) der Werkzeuge nach unten orientiert.

In beispielhaften Ausgestaltungen dient die Bestückungsvorrichtung zur Handhabung durchmessergroßer Werkzeuge, beispielsweise von Werkzeugen mit einem Hohlschaftkegel der Größe HSK-100 (zum Beispiel HSK-A 100). Ein solches Werkzeug verfügt über einen Handhabungsabschnitt mit einem Durchmesser von ca. 100 mm. Vergleiche zu beispielhaften Werkzeugabmessungen DIN 69893-1 (Ausgabe 2011-04). Andere Gestaltungen von Hohlschäften sind vorstellbar. Es sind auch andere Größen als HSK-A 100 vorstellbar, beispielsweise HSK-A 63 oder HSK-A 125. Auch andere Gestaltungen als Hohlschaftkegel sind vorstellbar, beispielsweise sogenannte Steilkegel-Schäfte.

In einer beispielhaften Ausgestaltung weist das Werkzeugmagazin, das mittels der Bestückungsvorrichtung bestückbar ist, 36 oder 52 Magazinplätze auf. Das Werkzeugmagazin ist beispielsweise ein horizontal orientiertes Kettenmagazin, das sich in einer Horizontalebene zumindest zwischen der zweiten Übergabeposition der Bestückungsvorrichtung und einer weiteren Übergabeposition (dritte Übergabeposition) zur Übergabe von Werkzeugen zwischen dem Werkzeugmagazin und der Werkzeugspindel erstreckt. Die Magazinplätze können individuell mit der Bestückungsvorrichtung beschickt werden. Werkzeuge können eingeschleust oder ausgeschleust werden. Die Bereitstellung des jeweiligen Magazinplatzes in der zweiten Übergabeposition erfolgt über einen Antrieb des Werkzeugmagazins.

Gemäß einer weiteren beispielhaften Ausgestaltung ist das Führungselement dazu ausgebildet, in einen Hohlschaft des Werkzeugs einzufahren, um ein Werkzeug aufzunehmen. Das Führungselement kann gemäß dieser Ausgestaltung in das Werkzeug eingreifen. Der Hohlschaft kann auch als Tasse bezeichnet werden, in die das Führungselement eingreift. Gemäß einer weiteren beispielhaften Ausgestaltung ist auch das Sicherungselement dazu ausgebildet, in den Hohlschaft des Werkzeugs einzufahren, um das Werkzeug aufzunehmen. Dies erfolgt insbesondere gemeinsam mit dem Führungselement.

Gemäß einer weiteren beispielhaften Ausgestaltung ist das Sicherungselement relativ zum Führungselement verfahrbar, um ein gegriffenes Werkzeug formschlüssig oder kraftschlüssig am Führungselement zu sichern. Durch eine gegenläufige Bewegung kann ein zuvor gesichertes Werkzeug vom Führungselement gelöst werden, wenn das Sicherungselement entsprechend verfahren wird.

Gemäß einer weiteren beispielhaften Ausgestaltung ist das Sicherungselement parallel zur Längsachse des Werkzeugs relativ zum Führungselement verfahrbar, um zumindest ein Rastelement in zumindest einen Rastabschnitt des Werkzeugs einzurücken. Durch diese Relativbewegung zwischen dem Sicherungselement und dem Führungselement kann das Werkzeug durch den Greifmechanismus innerhalb des Hohlschaftes an der Werkzeugmitnahmeeinheit des Werkzeugshuttles gesichert werden.

Durch eine gegenläufige Bewegung können die eingerückten Rastelementen freigegeben werden, so dass ein Lösen ermöglicht ist, zumindest in beispielhaften Ausgestaltungen. Bei den Rastelementen handelt es sich beispielsweise um Rastkugeln. Die Verrastung und die zugehörige Lagesicherung erfolgt beispielsweise formschlüssig. Beispielsweise ist der Rastabschnitt durch eine Hinterschneidung im Innenraum des Hohlschaftes gebildet, in die zumindest ein Rastelement einrücken kann. Die Hinterschneidung kann auch als Schulter bezeichnet werden. Beispielhaft sind drei oder mehr Rastelemente kreisförmig um die Längsachse verteilt. Wenn die Rastelemente durch das Sicherungselement nach außen gedrängt werden, kann das Werkzeug über seinen Hohlschaft definiert gehalten und gesichert werden.

Gemäß einer weiteren beispielhaften Ausgestaltung ist das Führungselement Bestandteil eines Führungszylinders, der am Grundkörper angeordnet ist. Der Führungszylinder ist beispielsweise als fluidisch gesteuerter Zylinder gestaltet. Die Steuerung erfolgt üblicherweise mit Druckluft, eine Steuerung mit einem Hydraulikfluid ist auch vorstellbar.

Gemäß einer weiteren beispielhaften Ausgestaltung ist das Sicherungselement Bestandteil eines Sicherungszylinders, der mit dem Führungselement gekoppelt ist. Der Sicherungszylinder ist beispielsweise als fluidisch gesteuerter Zylinder gestaltet. Die Steuerung erfolgt üblicherweise mit Druckluft, eine Steuerung mit einem Hydraulikfluid ist auch vorstellbar.

Gemäß einer weiteren beispielhaften Ausgestaltung ist zumindest das Führungselement oder das Sicherungselement Bestandteil eines in einem Mitnahmegehäuse parallel zur Längsachse des Werkzeugs verfahrbaren Kolbens. Demgemäß gibt es beispielsweise einen Führungskolben oder einen Sicherungskolben. In einer beispielhaften Ausgestaltung sind das Führungselement und das Sicherungselement konzentrisch zueinander und konzentrisch zur Längsachse des Werkzeugs orientiert.

Gemäß einer weiteren beispielhaften Ausgestaltung ist das Führungselement bei einem dem Werkzeug zugewandten Ende eines Führungskolbens ausgebildet, wobei das Führungselement insbesondere bei einem gegriffenen Werkzeug konzentrisch zur Längsachse des Werkzeugs ausgerichtet ist.

Gemäß einer weiteren beispielhaften Ausgestaltung ist das Sicherungselement bei einem dem Werkzeug zugewandten Ende eines Sicherungskolbens ausgebildet ist, wobei das Sicherungselement insbesondere konzentrisch zum Führungselement ausgerichtet ist. Gemäß einer weiteren beispielhaften Ausgestaltung ist der Sicherungskolben (radial) innerhalb des Führungskolbens angeordnet.

Gemäß einer beispielhaften Ausgestaltung ist der Führungskolben relativ zu einem Grundkörper des Werkzeugshuttles verfahrbar. Gemäß einer beispielhaften Ausgestaltung ist der Sicherungskolben relativ zum Führungskolben verfahrbar.

Gemäß einer weiteren beispielhaften Ausgestaltung durchragt der Sicherungskolben mit seinem vom Werkzeug abgewandten Ende den Führungskolben, wobei das vom Werkzeug abgewandte Ende des Sicherungskolbens einen Ausleger aufweist, der mit einer am Grundkörper angeordneten Positionsüberwachungseinheit zusammenwirkt. Auf diese Weise ergibt sich eine robuste Positionsüberwachung, beispielsweise über zumindest einen Näherungssensor. Die Positionsüberwachung kann durch extern zugängliche Sensorik erfolgen, die nicht innerhalb des Führungszylinders angeordnet ist. Dies vereinfacht Wartung, Reparatur und dergleichen.

Gemäß einer weiteren beispielhaften Ausgestaltung ist die Positionsüberwachungseinheit dazu ausgebildet, über den Ausleger eine Position des Führungskolbens und eine Position des Sicherungskolbens zu erfassen. Auf diese Weise kann erfasst werden, ob ein Werkzeug durch den Greifmechanismus der Werkzeugmitnahmeeinheit gehalten und gesichert ist.

Gemäß einer weiteren beispielhaften Ausgestaltung ist die Werkzeugmitnahmeeinheit gemeinsam mit dem Werkzeugshuttle zwischen der ersten Übergabeposition und der zweiten Übergabeposition verfahrbar. Beispielhaft vollzieht das Werkzeugshuttle eine translatorische Bewegung zwischen der ersten Übergabeposition und der zweiten Übergabeposition. In einer beispielhaften Ausgestaltung ist das Werkzeugmagazin nicht direkt für einen Bediener zum Einschleusen oder Ausschleusen von Werkzeugen verfügbar. Stattdessen ermöglicht die Bestückungsvorrichtung ein definiertes Beschicken des Werkzeugmagazins.

Gemäß einer weiteren beispielhaften Ausgestaltung greift der Greifmechanismus, insbesondere dessen Führungselement, das Werkzeug unter Auslassung eines an einem Werkzeugschaftumfang angeordneten Handhabungsabschnitts des Werkzeugs. Mit anderen Worten bleibt der (äußere) Handhabungsabschnitt für andere Handhabungstechnik zugänglich. Dies erlaubt beispielsweise ein definiertes Absetzen eines Werkzeugs im Werkzeugmagazin. Bei der Betätigung des Greifmechanismus bleibt der Handhabungsabschnitt in einer beispielhaften Ausgestaltung frei. Dort erfolgt durch den Greifmechanismus selbst kein Angriff an das Werkzeug.

Gemäß einer weiteren beispielhaften Ausgestaltung ruht das Werkzeug am Bereitstellungsplatz mit dem Handhabungsabschnitt auf einer stationären Bereitstellungsauflage. Mit anderen Worten kann ein Werkzeug am Bereitstellungsplatz auf die Bereitstellungsauflage gelegt und von dort mittels der Werkzeugmitnahmeeinheit des Werkzeugshuttles aus der ersten Übergabeposition in die zweite Übergabeposition verfahren werden.

Gemäß einer weiteren beispielhaften Ausgestaltung ist das Werkzeug im Werkzeugmagazin im Magazinplatz über den Handhabungsabschnitt gehalten. Sodann kann beispielsweise die Werkzeugspindel an den Hohlschaft des Werkzeugs angreifen, um das Werkzeug mittels Pick-Up aus dem Werkzeugmagazin zu entnehmen oder um ein Werkzeug in einen freien Magazinplatz des Werkzeugmagazins einzusetzen.

Gemäß einer weiteren beispielhaften Ausgestaltung ist am Bereitstellungsplatz zumindest eine mechanische Orientierungshilfe zur Gewährleistung einer Drehorientierung eines eingelegten Werkzeugs oder zumindest ein Näherungssensor zur Erfassung eines eingelegten Werkzeugs angeordnet. Dies hat den Vorteil, dass das Werkzeug mit einer definierten Orientierung (Drehorientierung) transferiert wird. Auf diese Weise kann sich das Einsetzen und Verriegeln im Werkzeugmagazin vereinfachen. Ferner erlaubt eine definierte Orientierung beispielsweise ein vereinfachtes Auslesen eines definiert orientierten Werkzeug-Identifikators (RFID-Chip, Barcode o. ä.).

Beispielsweise dient ein erster Näherungssensor zur Erfassung der Präsenz eines Werkzeugs, zum Beispiel durch Erfassung der Anwesenheit von dessen Hohlschaft. Beispielsweise dient ein weiterer Näherungssensor zur Prüfung, ob eine bestimmte Drehorientierung beim Werkzeug tatsächlich vorliegt. Dies erfolgt beispielsweise durch Anpeilen bestimmter Geometrien am Werkzeug, hierbei handelt es sich beispielsweise um eine Ausnehmung, die als Sitz für einen Werkzeug-Identifikator dient. Zusätzlich oder alternativ zum zweiten Näherungssensor kann ein Sensor zum Erfassen/Auslesen des Werkzeug-Identifikators verbaut sein.

Gemäß einer weiteren beispielhaften Ausgestaltung ist am Bereitstellungsplatz zumindest ein Anschlag für ein in der ersten Übergabeposition bereitgestelltes Werkzeug vorgesehen, wobei der Anschlag durch das Werkzeugshuttle aus einer Sperrposition in eine Freigabeposition bringbar ist. Der Anschlag ist beispielsweise als beweglicher Anschlag gestaltet. Auf diese Weise kann ein Werkzeug definiert am Bereitstellungsplatz in der ersten Übergabeposition bereitgestellt werden. Dies vereinfacht das Greifen des Werkzeugs mit der Werkzeugmitnahmeeinheit. Wenn sich das Werkzeugshuttle der ersten Übergabeposition nähert, kann das Werkzeugshuttle den zumindest einen Anschlag bewegen, so dass das gegriffene Werkzeug vom Bereitstellungsplatz in Richtung auf die zweite Übergabeposition entnehmbar ist. Eine solche Betätigung des zumindest einen Anschlags erfolgt beispielsweise über Schiebestücke, die am Werkzeugshuttle vorgesehen sind.

In einer beispielhaften Ausgestaltung kann das Werkzeugshuttle den zumindest einen beweglichen Anschlag gegen die Kraft eines Vorspannelements bewegen. Wenn das Werkzeugshuttle vom Bereitstellungsplatz entfernt ist, befindet sich der zumindest eine Anschlag in einer Sperrstellung. Wenn das Shuttle am Bereitstellungsplatz in der ersten Übergabeposition positioniert ist, befindet sich der zumindest eine Anschlag in einer Freigabestellung.

Gemäß einem weiteren Aspekt bezieht sich die vorliegende Offenbarung auf eine Werkzeugmaschine, die Folgendes aufweist:
- ein Gestell,
- zumindest eine Werkstückauflage,
- zumindest eine Werkzeugspindel, die relativ zur Werkstückauflage verfahrbar ist,
- zumindest ein der Werkzeugspindel zugeordnetes Werkzeugmagazin zur Bereitstellung einer Mehrzahl von Werkzeugen, die insbesondere durch die Werkzeugspindel im Pick-up-Verfahren greifbar sind, und
- zumindest eine Bestückungsvorrichtung gemäß zumindest einer der hierin beschriebenen Ausgestaltungen, mit der Werkzeuge in das Werkzeugmagazin eingebracht oder aus dem Werkzeugmagazin entnommen werden können,
   wobei der Bereitstellungsplatz der Bestückungsvorrichtung zum Einschleusen oder Ausschleusen von Werkzeugen zugänglich ist.

Die Bestückungsvorrichtung dient insbesondere dazu, Werkzeuge von außen in das Werkzeugmagazin einzuschleusen. Dies betrifft beispielsweise einzelne Werkzeuge, die händisch oder automatisiert am Bereitstellungsplatz vorgehalten werden. Umgekehrt können auf diese Weise Werkzeuge ausgeschleust werden. Das Werkzeugmagazin ist beispielsweise als Kettenmagazin gestaltet, insbesondere als horizontal orientiertes Kettenmagazin, das einen Pick-Up-Werkzeugwechsel mit einer vertikal orientierten Spindel erlaubt.

Gemäß einer weiteren beispielhaften Ausgestaltung umfasst die Werkzeugmaschine ein erstes Werkzeugmagazin und ein zweites Werkzeugmagazin, und genau eine Bestückungsvorrichtung, wobei die Bestückungsvorrichtung funktional mit dem ersten Werkzeugmagazin zum Einschleusen oder Ausschleusen von Werkzeugen gekoppelt ist, und wobei Werkzeuge durch die Werkzeugspindel zwischen dem ersten Werkzeugmagazin und dem zweiten Werkzeugmagazin transferierbar sind.

Auf diese Weise kann innerhalb der Werkzeugmaschine ein Transfer zwischen dem ersten Werkzeugmagazin und dem zweiten Werkzeugmagazin durch die Werkzeugspindel erfolgen. Die Beschickung eines der beiden Werkstückmagazine von außen erfolgt unter Verwendung der Bestückungsvorrichtung. Die Beschickung des anderen Werkzeugmagazins kann mittelbar unter Zwischenschaltung der Werkzeugspindel für einen Werkzeugtransfer zwischen den beiden Werkzeugmagazinen erfolgen.

In einer beispielhaften Ausgestaltung weist die Werkzeugmaschine eine Werkzeugspindel und zwei Werkzeugmagazine auf, die beide für die Werkzeugspindel für einen Werkzeugwechsel erreichbar sind. Der Werkzeugwechsel erfolgt insbesondere im Pick-Up-Verfahren. Zumindest eines der beiden Werkstückmagazine kann mit einer Bestückungsvorrichtung nach einer der hierin genannten Ausgestaltungen beschickt werden. Die Werkzeugmagazine können nebeneinander, übereinander und/oder zumindest teilweise zueinander versetzt angeordnet sein. Die Werkzeugspindel kann für einen Sortiervorgang genutzt werden.

In einer weiteren beispielhaften Ausgestaltung weist die Werkzeugmaschine zwei Werkzeugspindeln und zwei Werkzeugmagazine auf. Bei einer solchen Ausgestaltung ist es vorstellbar, für jedes der beiden Werkzeugmagazine eine eigene Bestückungsvorrichtung bereitzustellen. Es ist auch vorstellbar, lediglich für eines der beiden Werkzeugmagazine eine Bestückungsvorrichtung bereitzustellen. Ein Werkstücktransfer zwischen den beiden Werkzeugmagazinen erfolgt dann über eine der beiden Werkzeugspindeln.

Gemäß einem weiteren Aspekt bezieht sich die vorliegende Offenbarung auf ein Verfahren zum Einschleusen oder Ausschleusen von Werkzeugen bei einer Werkzeugmaschine gemäß zumindest einer der hierin beschriebenen Ausgestaltungen, umfassend die folgenden Schritte:
- Einsetzen eines Werkzeugs in den Bereitstellungsplatz,
- Positionieren des Werkzeugshuttles in der ersten Übergabeposition, so dass das Werkzeug für die Werkzeugmitnahmeeinheit erreichbar ist,
- Steuerung der Werkzeugmitnahmeeinheit zur Bewegung des Führungselements und des Sicherungselements, um das Werkzeug zu greifen und am Werkzeugshuttle zu sichern,
- Verfahren des Werkzeugshuttles in die zweite Übergabeposition, in der ein Magazinplatz des Werkzeugmagazins bereitsteht, und
- Übergabe des Werkzeugs an den Magazinplatz des Werkzeugmagazins, umfassend eine Bewegung des Führungselements und des Sicherungselements.

Analog kann das Verfahren zum Ausschleusen von Werkzeugen genutzt werden. Üblicherweise eignet sich das Verfahren sowohl zum Einschleusen als auch zum Ausschleusen. Im Falle zweier Werkzeugmagazine kann das Verfahren einen Schritt des Umsortierens und/oder eines Werkzeugtransfers zwischen den beiden Werkzeugmagazinen umfassen, wobei dies durch die Werkzeugspindel unter Nutzung eines Pick-Up-Verfahrens erfolgt.

Es versteht sich, dass die vorstehend genannten und die nachstehend noch zu erläuternden Merkmale der Offenbarung nicht nur in der jeweils angegebenen Kombination, sondern auch in anderen Kombinationen oder in Alleinstellung verwendbar sind, ohne den Rahmen der vorliegenden Offenbarung zu verlassen.

Weitere Merkmale und Vorteile ergeben sich aus der nachfolgenden Beschreibung mehrerer beispielhafter Ausführungsformen unter Bezugnahme auf die Zeichnungen. Es zeigen:
- Fig. 1:: eine perspektivische Ansicht einer Werkzeugmaschine;
- Fig. 2: eine Draufsicht auf eine Werkzeugmaschine mit Werkzeugmagazin und Bestückungsvorrichtung;
- Fig. 3:: eine weitere Draufsicht auf eine Werkzeugmaschine mit Werkzeugmagazin und Bestückungsvorrichtung;
- Fig. 4:: eine weitere Draufsicht auf eine Werkzeugmaschine mit Werkzeugmagazin und Bestückungsvorrichtung;
- Fig. 5:: eine perspektivische Ansicht einer Bestückungsvorrichtung;
- Fig. 6:: eine Teilansicht der Bestückungsvorrichtung gemäß Fig. 5 zur Veranschaulichung eines Bereitstellungsplatzes;
- Fig. 7:: eine weitere perspektivische Teilansicht der Bestückungsvorrichtung gemäß Fig. 5;
- Fig. 8:: eine Teilansicht des Bereitstellungsplatzes einer Bestückungsvorrichtung zur Veranschaulichung eines Anschlags in einer Sperrstellung;
- Fig. 9:: eine an Fig. 8 angelehnte Teilansicht des Bereitstellungsplatzes zur Veranschaulichung eines Anschlags in einer Freigabestellung;
- Fig. 10:: eine Schnittansicht durch einen Greifmechanismus einer Werkzeugmitnahmeeinheit eines Werkzeugshuttles in einer ausgerückten Stellung;
- Fig. 11:: eine auf Fig. 10 beruhende weitere Schnittansicht in einer in ein Werkzeug eingerückten Stellung des Greifmechanismus, noch ohne Verriegelung;
- Fig. 12:: eine auf den Figuren 10 und 11 beruhende weitere Schnittansicht in einer vollständig eingerückten Stellung des Greifmechanismus, mit Verriegelung;
- Fig. 13:: eine weitere Schnittansicht durch das anhand der Figuren 10-12 veranschaulichte Werkzeugshuttle mit Werkzeugmitnahmeeinheit und Greifmechanismus in abweichender Orientierung;
- Fig. 14:: eine perspektivische Darstellung eines Werkzeugshuttles mit einem Greifmechanismus sowie einem vom Greifmechanismus gehaltenen Werkzeug; und
- Fig. 15:: ein vereinfachtes Blockdiagramm zur Veranschaulichung einer beispielhaften Ausgestaltung eines Verfahrens zum Einschleusen oder Ausschleusen eines Werkzeugs bei einer Werkzeugmaschine.

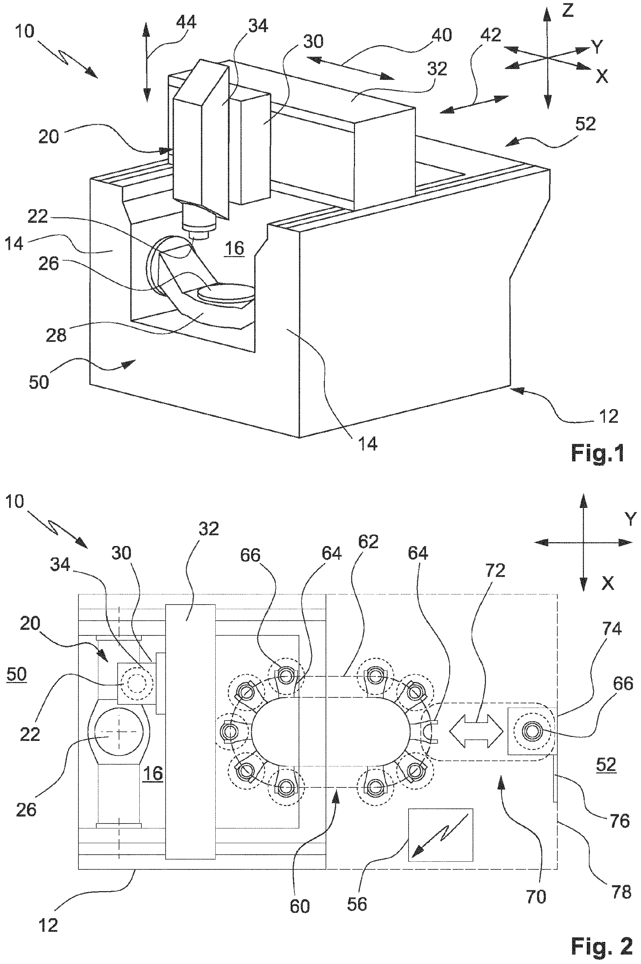

Die Figur 1 veranschaulicht anhand einer perspektivischen Darstellung die Grundstruktur einer insgesamt mit 10 bezeichnete Werkzeugmaschine. Ergänzend zeigen die Figuren 2-4 verschiedene Draufsichten auf Werkzeugmaschinen 10. In den Ausführungsbeispielen gemäß den Figuren 1-4 ist die Werkzeugmaschine 10 als sogenannte Gantry-Maschine gestaltet. Dies ist nicht einschränkend zu verstehen. Es sind auch Gestaltungen in Portalbauweise (beispielsweise mit stehendem Portal) oder in Fahrständerbauweise vorstellbar.

In zumindest einigen der Figuren ist aus Veranschaulichungsgründen ein kartesisches Koordinatensystem X-Y-Z dargestellt. Das Koordinatensystem dient zur Veranschaulichung grundlegender Orientierungen und Bewegungsachsen der Werkzeugmaschine 10 sowie von deren Komponenten. Eine mit X bezeichnete Achse kennzeichnet allgemein eine Längserstreckung. Eine mit Y bezeichnete Achse kennzeichnet allgemein eine Tiefenerstreckung. Im Ausführungsbeispiel definieren die Achsen X und Y gemeinsam eine Horizontalebene. Eine mit Z bezeichnete Achse kennzeichnet allgemein eine Höhenerstreckung. Das Koordinatensystem X-Y-Z dient in erster Linie zur Veranschaulichung und ist nicht ihn einschränkender Weise zu verstehen. Es versteht sich, dass auch andere Koordinatensysteme zur Beschreibung der Werkzeugmaschine 10 und deren Komponenten nutzbar sind. Der Fachmann kann entsprechende Transformationen vornehmen.

Im Ausführungsbeispiel gemäß Fig. 1 weist die Werkzeugmaschine 10 ein Gestell 12 auf, das auch als Basis oder Bett bezeichnet werden kann. Bei der gezeigten Gestaltung als Gantry-Maschine umfasst das Gestell 12 zwei seitliche Wangen 14, an deren Oberseite Führungen (Y-Führungen) ausgebildet sind. Die Werkzeugmaschine 10 definiert einen Arbeitsraum 16, in dem Werkstücke bearbeitet werden können, insbesondere durch spanabhebende Bearbeitung. Üblicherweise ist der Arbeitsraum 16 eingehaust (in Fig. 1 nicht gezeigt).

Die Werkzeugmaschine 10 umfasst eine Werkzeugspindel 20 mit einem Werkzeughalter 22, der zur Aufnahme eines Werkzeugs ausgebildet ist. Im Ausführungsbeispiel ist die Werkzeugspindel 20 vertikal orientiert. Die Werkzeugspindel 20 ist in Fig. 1 als hängende Spindel gestaltet. Werkzeuge können um eine vertikal orientierte Spindelachse angetrieben werden. Die Werkzeugspindel 20 ist relativ zu einer Werkstückauflage 26 beweglich, um ein dort angeordnetes Werkstück (in Fig. 1 nicht gezeigt) zu bearbeiten. Im Ausführungsbeispiel ist die Werkstückauflage 26 auf einer Schwenkbrücke 28 angeordnet, die beidseitig an den Wangen 14 des Gestells 12 gelagert ist. Andere Gestaltungen sind vorstellbar. Die Werkzeugspindel 20 ist in Fig. 1 als hängende Spindel gestaltet.

Die Werkzeugspindel 20 ist in drei linearen Achsen relativ zur Werkstückauflage 26 verfahrbar. Zu diesem Zweck sind im Ausführungsbeispiel ein X-Schlitten 30, ein Y-Schlitten 32 und ein Z-Schlitten 34 vorgesehen. Der Y-Schlitten 32 sitzt auf den Wangen 14 des Gestells 12. Der X-Schlitten 30 ist am Y-Schlitten 32 linear verfahrbar angeordnet. Der Z-Schlitten 34 ist am X-Schlitten 30 linear verfahrbar angeordnet. Der Z-Schlitten trägt die Werkzeugspindel 20. Der X-Schlitten 30 trägt den Z-Schlitten 34. Der Y-Schlitten 32 trägt den X-Schlitten 30.

Der X-Schlitten 30 ist in einer X-Achse 40 (X-Richtung) entlang des Y-Schlittens 32 translatorisch verfahrbar. Der Y-Schlitten 32 ist in einer Y-Achse 42 (Y-Richtung) entlang der Wangen 14 des Gestells 12 translatorisch verfahrbar. Der Z-Schlitten 34 ist in einer Z-Achse 44 (Z-Richtung) entlang des X-Schlittens 30 verfahrbar. Der Z-Schlitten 34 ist vertikal verfahrbar. Der X-Schlitten 30 und der Y-Schlitten 32 sind horizontal verfahrbar. Im Ausführungsbeispiel stellen die Schwenkbrücke 28 (A-Achse, vergleiche Schwenkbewegungen um die X-Achse) und die Werkstückauflage 26 (C-Achse, vergleiche Schwenkbewegungen um die Z-Achse) weitere (rotatorische) Bewegungsachsen bereit. Insgesamt ist mit der Werkzeugmaschine 10 eine 5-Achs-Bearbeitung möglich. Andere Gestaltungen von Werkzeugmaschine 10 sind vorstellbar, beispielsweise mit einer 4-Achs-Kinematik, einer 3-Achs-Kinematik oder dergleichen.

Aus Veranschaulichungsgründen kennzeichnet in Fig. 1 ein Pfeil 50 eine Bearbeitungsseite, die auch als Vorderseite bezeichnet werden kann. Ein gegenüberliegender Pfeil 52 kennzeichnet eine Werkzeugbeschickungsseite, die auch als Rückseite bezeichnet werden kann. Dies ist nicht einschränkend zu verstehen.

Die Figuren 2-4 zeigen Draufsichten auf verschiedene Konfigurationen von Werkzeugmaschine 10. Die in Fig. 2 gezeigte Werkzeugmaschine 10 entspricht hinsichtlich ihrer Basiskonfiguration der anhand der Fig. 1 veranschaulichten Gestaltung. In Fig. 2 ist mit 56 eine Steuereinheit der Werkzeugmaschine 10 angedeutet. Die Steuereinheit 56 steuert Komponenten der Werkzeugmaschine 10. Dies betrifft beispielhaft die Bearbeitung von Werkstücken, aber auch einen Werkstückwechsel, Werkzeugwechsel, Werkzeugverwaltung, Positionsüberwachungen, Steuerung von Hilfsaggregaten usw.

Zusätzlich ist anhand einer schematischen Darstellung ein Werkzeugmagazin 60 gezeigt, dass beispielhaft als Kettenmagazin 62 gestaltet ist. Das Werkzeugmagazin 60 weist eine Mehrzahl von Magazinplätzen 64 auf, die zur Aufnahme von Werkzeugen 66 dienen. Bei der in Fig. 2 gezeigten Ausgestaltung ist das Werkzeugmagazin 60 in einer Horizontalebene orientiert. Werkzeuge 66, die in Magazinplätzen 64 des Werkzeugmagazin 60 gehalten sind, sind vertikal orientiert. Auf diese Weise kann die Werkzeugspindel 20 mit ihrem Werkzeughalter 22 Werkzeuge 66 im Pick-Up-Verfahren aus dem Werkzeugmagazin 60 entnehmen und bedarfsweise dort absetzen. Die Werkzeugspindel 20 kann Werkzeuge 66 von oben entnehmen oder absetzen.

Zur Beschickung des Werkzeugmagazins 60 ist eine Bestückungsvorrichtung 70 vorgesehen. Die Bestückungsvorrichtung 70 ist dazu ausgebildet, Werkzeuge 66 zwischen einer Zugangsöffnung 74 und dem Werkzeugmagazin 60 zu transferieren, vergleiche einen mit 72 bezeichneten Pfeil. Werkzeuge 66 können an der Zugangsöffnung 74 bereitgestellt und von dort durch die Bestückungsvorrichtung 70 in einen freien Magazinplatz 64 des Werkzeugmagazins 60 eingeschleust werden, der vom Werkzeugmagazin 60 dort bereitgestellt wird.

Im Ausführungsbeispiel gemäß Fig. 2 ist die Zugangsöffnung 74 der Bestückungsvorrichtung 70 bei der Rückseite (Werkzeugbeschickungsseite 52) der Werkzeugmaschine 10 angeordnet. Die Zugangsöffnung 74 ist beispielhaft durch eine Tür 76 verschließbar. Werkzeuge 66 können manuell in die Zugangsöffnung 74 eingeführt und dort für die weitere Handhabung mit der Bestückungsvorrichtung 70 abgesetzt werden. Ferner ist in Fig. 2 durch eine gestrichelte Linie eine Einhausung 78 angedeutet. Die Einhausung 78 umgibt zumindest Teilabschnitte der Werkzeugmaschine 10.

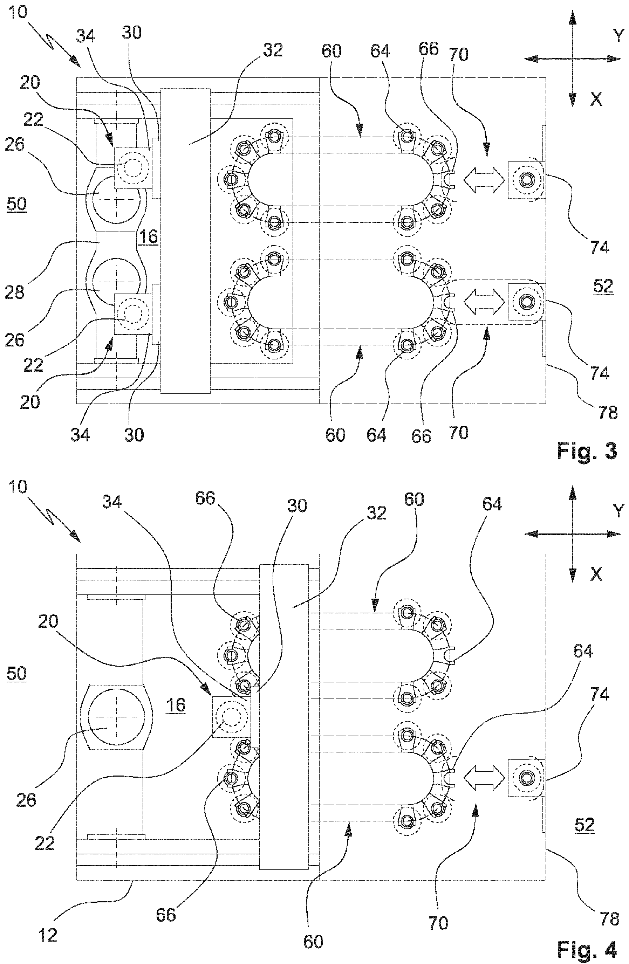

Fig. 3 zeigt anhand einer schematischen Draufsicht eine Werkzeugmaschine 10 in Doppelspindel-Gestaltung. Es sind zwei jeweils mit einem Werkzeughalter 22 versehene Werkzeugspindeln 20 vorgesehen, die voneinander beabstandet jeweils über einen Z-Schlitten 34 und einen X-Schlitten 30 an einem gemeinsamen Y-Schlitten 32 angeordnet sind. Im Ausführungsbeispiel gemäß Fig. 3 sind die beiden Werkzeugspindeln 20 unabhängig voneinander in der X-Richtung verfahrbar. Es kann jedoch eine softwaremäßige Kopplung der Verfahrbewegungen genutzt werden. Jeder der beiden Werkzeugspindeln 20 ist an der Schwenkbrücke 28 eine Werkstückauflage 26 zugeordnet. Auf diese Weise können zwei Werkstücke gemeinsam (synchron) bearbeitet werden.

Die Werkzeugmaschine 10 gemäß Fig. 3 weist zwei Werkzeugmagazine 60 auf, von denen jeweils eines einer der beiden Werkzeugspindeln 20 zugeordnet ist. Zur Beschickung der Werkzeugmagazine 60 ist jeweils eine Bestückungsvorrichtung 70 vorgesehen, die über eine Zugangsöffnung 74 mit Werkzeugen 66 beschickt werden kann.

Fig. 4 zeigt anhand einer schematischen Draufsicht eine Werkzeugmaschine 10 mit einer einzigen Werkzeugspindel 20 und einer einzigen Werkstückauflage 26. In einem rückwärtigen Bereich hinter dem Arbeitsraum 16 der Werkzeugmaschine 10 sind zwei Werkzeugmagazine 60 nebeneinander angeordnet. Beide Werkzeugmagazine 60 sind für die Werkzeugspindel 20 für einen Pick-Up-Wechsel erreichbar. Lediglich eines der beiden Werkzeugmagazine 60 ist mit einer Bestückungsvorrichtung 70 gekoppelt, deren Zugangsöffnung 74 über die Werkzeugbeschickungsseite 52 im rückwärtigen Bereich der Werkzeugmaschine 10 erreichbar ist. Bei der gegebenen Konfiguration können jedoch auch Werkzeuge 66 in das andere Werkzeugmagazin 60 eingeschleust (oder von dort ausgeschleust) werden. In einem solchen Fall findet ein Transfer von Werkzeugen 66 zwischen den beiden benachbarten Werkzeugmagazinen 60 statt, der durch die Werkzeugspindel 20 bewerkstelligt wird. Auf diese Weise kann auch ein Sortiervorgang durchgeführt werden.

Es versteht sich, dass die anhand der Figuren 2-4 veranschaulichten Gestaltungen der Bestückungsvorrichtung 70 nicht zwingend eine Anordnung der Zugangsöffnung 74 an einer der Bearbeitungsseite 50 (Vorderseite) gegenüberliegenden rückwärtigen Werkzeugbeschickungsseite 52 vorsieht. Die Bestückungsvorrichtung 70 kann auch seitlich an ein Werkzeugmagazin 60 ankoppeln.

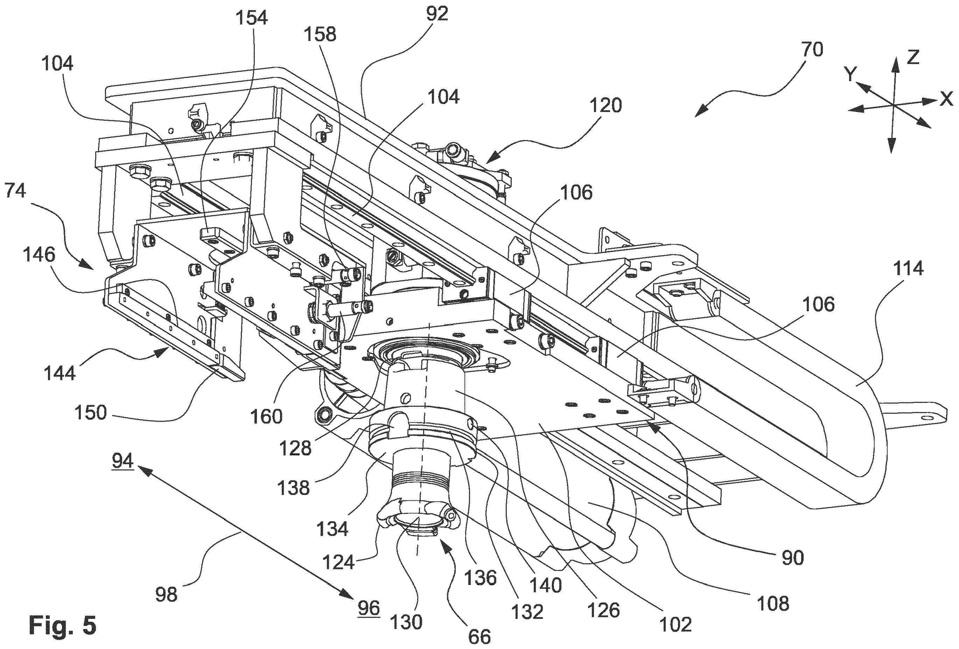

Auf Basis der anhand der Figuren 1-4 veranschaulichten Gestaltungen von Werkzeugmaschinen 10 werden nachfolgend mit Bezugnahme auf die Figuren 5-14 beispielhafte Ausgestaltungen und Details von Bestückungsvorrichtungen 70 erläutert. Die Bestückungsvorrichtungen 70 eignen sich zur Beschickung von Werkzeugmagazinen 60. Auf diese Weise können Werkzeuge 66 eingeschleust oder ausgeschleust werden. Das Absetzen eines Werkzeugs 66 in der Zugangsöffnung 74 oder ein Entnehmen eines Werkzeugs 66 aus der Zugangsöffnung 74 kann durch einen Bediener bedarfsweise hauptzeitparallel erfolgen.

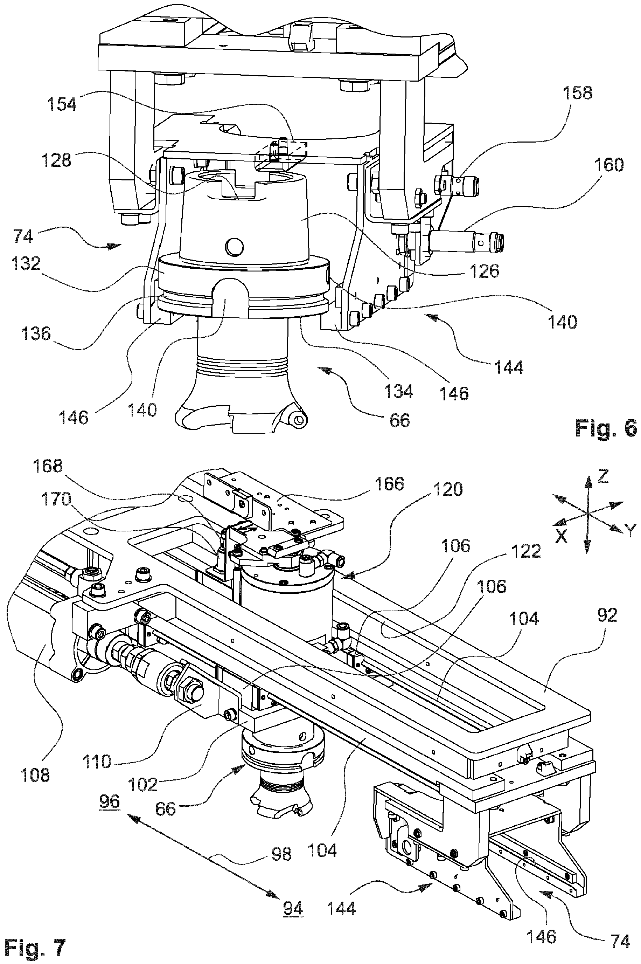

Fig. 5 zeigt eine perspektivische Ansicht auf eine Bestückungsvorrichtung 70, von unten her. Fig. 7 zeigt eine korrespondierende perspektivische Teilansicht, von oben her. Fig. 6 veranschaulicht ein Detail einer Zugangsöffnung 74.

Die Bestückungsvorrichtung 70 umfasst ein Werkzeugshuttle 90, das an einem gestellfesten Träger 92 gelagert ist. Das Werkzeugshuttle 90 ist zwischen einer ersten Übergabeposition 94 und einer zweiten Übergabeposition 96 verfahrbar. In Fig. 3 veranschaulicht ein mit 98 bezeichneter Doppelpfeil den zugehörigen Verfahrweg. Das Werkzeugshuttle 90 ist insbesondere linear verfahrbar, vergleiche auch den Doppelpfeil 72 in Fig. 2, der die Transferbewegung zwischen Zugangsöffnung 74 und Werkzeugmagazin 60 veranschaulicht.

Das Werkzeugshuttle 90 weist einen Grundkörper 102 auf, der im Ausführungsbeispiel als Grundplatte gestaltet ist. Der Grundkörper 102 ist über Schlitten 106 an Führungen 104 gelagert, die am gestellfesten Träger 92 befestigt sind. Im Ausführungsbeispiel sind zwei zueinander parallele Führungen 104 zugeordnet, die parallel zum Verfahrweg 98 orientiert sind. Der Grundkörper 102 des Werkzeugshuttles 90 weist vier Schlitten 106 auf, von denen jeweils zwei Schlitten 106 an einer der beiden Führungen 104 gelagert sind. Der Antrieb des Werkzeugshuttles 90 erfolgt über einen Antrieb 108, der beispielsweise als Zylinder gestaltet ist. Der Antrieb 108 wirkt auf einen Mitnehmer 110, der am Grundkörper 102 des Werkzeugshuttles 90 befestigt ist, vergleiche auch Fig. 7. Ferner ist in Fig. 5 mit 114 eine beispielhaft als sogenannter Kabelschlepp gestaltete Versorgungsleitung angedeutet. Die Versorgungsleitung 114 verbindet das Werkzeugshuttle 90 mit dem gestellfesten Träger 92. Auf diese Weise können unabhängig von einer aktuellen Position des Werkzeugshuttles 90 Informationen, Energie und Betriebsmedien übertragen werden.

Das Werkzeugshuttle 90 der Bestückungsvorrichtung 70 trägt ferner eine Werkzeugmitnahmeeinheit 120. Die Werkzeugmitnahmeeinheit 120 ist zum Greifen eines Werkzeugs 66 ausgebildet. Auf diese Weise kann das Werkzeug 66 am Werkzeugshuttle 90 gesichert und durch die Bewegung des Werkzeugshuttles 90 zwischen der ersten Übergabeposition 94 und der zweiten Übergabeposition 96 transferiert werden. Bei der zweiten Übergabeposition 96 erfolgt ein Transfer zwischen dem Werkzeugshuttle 90 der Bestückungsvorrichtung 70 und einem Magazinplatz 64 eines Werkzeugmagazins 60 (vergleiche hierzu auch Fig. 2). Die Werkzeugmitnahmeeinheit 120 durchragt im gezeigten Ausführungsbeispiel eine Öffnung 122 im Träger 92, vergleiche Fig. 7.

In den Figuren 5 und 6 ist jeweils ein Werkzeug 66 durch die Werkzeugmitnahmeeinheit 120 am Werkzeugshuttle 90 gehalten. In Fig. 6 befindet sich ein zur Abholung bereit stehendes Werkzeug 66 in einer Bereitstellungsposition bei der Zugangsöffnung 74.

Bei dem Werkzeug 66 handelt sich beispielhaft um ein Bohrwerkzeug, Fräswerkzeug oder dergleichen, allgemein um ein Werkzeug zur spanenden Bearbeitung. Das Werkzeug 66 umfasst einen Bearbeitungsabschnitt 124 und einen vom Bearbeitungsabschnitt 124 abgewandten Hohlschaft 126. Der Bearbeitungsabschnitt 124 kann zumindest eine Schneide umfassen. Die Werkzeugmitnahmeeinheit 120 ist dazu ausgebildet, zumindest teilweise in den Hohlschaft 126 des Werkzeugs 66 einzufahren, um das Werkzeug 66 über den Hohlschaft 126 zu greifen und zu sichern. Der Hohlschaft 126 weist im Ausführungsbeispiel an seinem Ende zwei um 180° zueinander versetzte Ausnehmungen 128 auf, die zur Gewährleistung einer gewünschten Drehorientierung des Werkzeugs 66 in der Bestückungsvorrichtung 70 nutzbar sind.

Das Werkzeug 66 umfasst eine Längsachse 130. Der Hohlschaft 126 ist zumindest abschnittsweise konzentrisch zur Längsachse 130 ausgebildet. Das Werkzeug 66 umfasst ferner einen Handhabungsabschnitt 132, der zwischen dem Hohlschaft 126 und dem Bearbeitungsabschnitt 124 angeordnet ist. Bei dem Handhabungsabschnitt 132 kann es sich um eine umlaufende Wulst mit Funktionselementen zur Handhabung handeln. Im Ausführungsbeispiel umfasst der Handhabungsabschnitt 132 eine Auflagefläche 134, eine Handhabungsnut 136 und zumindest eine Orientierungsnut 138. Ferner ist in den Figuren 5 und 6 eine Ausnehmung 140 im Handhabungsabschnitt 132 angedeutet, die beispielsweise zur Aufnahme eines Werkzeug-Identifikators ausgebildet ist.

Zur Bereitstellung eines Werkzeugs 66 zur Aufnahme durch die Werkzeugmitnahmeeinheit 120 dient ein Bereitstellungsplatz 144. Fig. 6 zeigt den Bereitstellungsplatz 144 in vergrößerter Darstellung. In Fig. 6 ist ein Werkzeug 66 über die Zugangsöffnung 74 an den Bereitstellungsplatz 144 herangeführt. Das Werkzeug 66 sitzt mit der Auflagefläche 134 des Handhabungsabschnitts 132 auf zwei seitlichen Bereitstellungsauflagen 146 auf. Das Absetzen des Werkzeugs 66 kann händisch durch den Bediener erfolgen. Beim Bereitstellungsplatz 144 sind ferner Anschläge 150 vorgesehen (in Fig. 5 gezeigt, in Fig. 6 durch das Werkzeug 66 verdeckt), die sicherstellen, dass das eingesetzte Werkzeug 66 in der ersten Übergabeposition 94 bereitsteht und nicht etwa darüber hinaus geschoben werden kann.

Fig. 6 zeigt ferner anhand einer teilweise gestrichelten (weil verdeckten) Darstellung eine Orientierungshilfe 154, die beim Bereitstellungsplatz 144 angeordnet ist und beim Einsetzen des Werkzeugs 66 eine gewünschte Orientierung der Ausnehmungen 128 des Hohlschafts 126 gewährleistet. Auf diese Weise kann das Werkzeug 66 nur in einer gewünschten Vorzugsorientierung beim Bereitstellungsplatz 144 abgesetzt werden, um dort in der ersten Übergabeposition 94 zur Aufnahme durch die Werkzeugmitnahmeeinheit 120 bereitzustehen.

Fig. 6 zeigt ferner zwei Sensoren 158, 160, die beim Bereitstellungsplatz 144 vorgesehen sind, um die Bereitstellung des Werkzeugs 66 zu überwachen. Beispielhaft handelt es sich bei dem Sensor 158 um einen Näherungssensor, der auf den Hohlschaft 126 des Werkzeugs 66 ausgerichtet ist. Der Näherungssensor 158 erfasst die Anwesenheit des Hohlschaft 126, wenn das Werkzeug 66 auf der Bereitstellungsauflage 146 weit genug in Richtung auf die erste Übergabeposition 94 geschoben ist. Beispielhaft handelt es sich bei dem Sensor 160 um einen Sensor zur Erfassung der Ausnehmung 140. In einer beispielhaften Ausgestaltung ist der Sensor 160 dazu ausgebildet, die Anwesenheit der Ausnehmung 140 zu erfassen. In einer beispielhaften Ausgestaltung ist der Sensor 160 dazu ausgebildet, einen Werkzeug-Identifikator auszulesen, der in der Ausnehmung 140 sitzt.

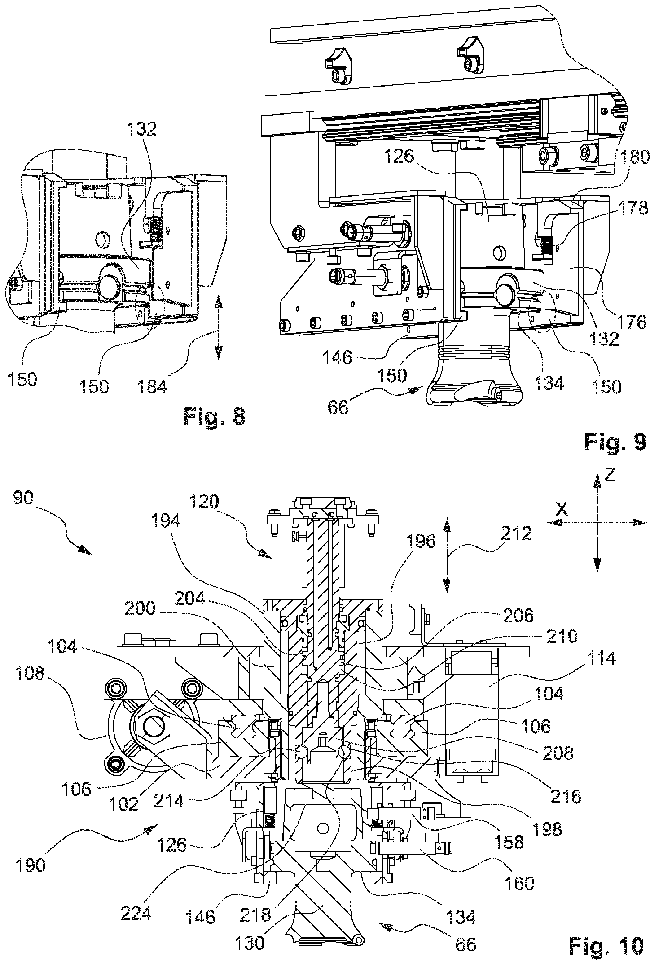

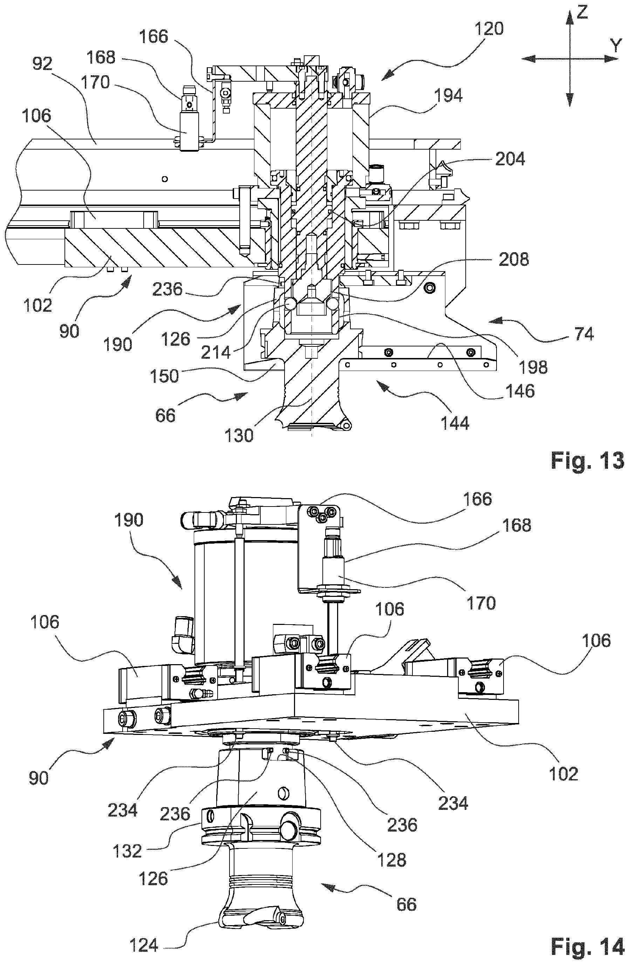

Fig. 7 zeigt ferner, dass im Ausführungsbeispiel die Werkzeugmitnahmeeinheit 120 einen Ausleger 166 trägt, der an einem vom Werkzeug 66 abgewandten Ende der Werkzeugmitnahmeeinheit 120 angeordnet ist. Im Ausführungsbeispiel sitzt der Ausleger 166 oberhalb des Trägers 92, vergleiche hierzu auch Fig. 13. Der Ausleger 166 trägt eine Positionsüberwachungseinheit 168 mit zumindest einem Näherungssensor 170. Der Ausleger 166 ist in der gezeigten Konfiguration vertikal beweglich, wenn die Werkzeugmitnahmeeinheit 120 betätigt wird, um über einen Greifmechanismus (vergleiche Bezugszeichen 190 in Fig. 10) in einen Hohlschaft 126 eines Werkzeugs 66 einzufahren und das Werkzeug 66 zu sichern. Auf diese Weise kann der Betriebszustand der Werkzeugmitnahmeeinheit 120 überwacht werden.

Die Figuren 8 und 9 veranschaulichen die Anschläge 150 des Bereitstellungsplatzes 144, vergleiche auch Fig. 5. Fig. 8 zeigt die Anschläge 150 in einer Sperrstellung. Fig. 9 zeigt die Anschläge 150 in einer Freigabestellung. Beim Bereitstellungsplatz 144 folgen die Anschläge 150 auf die Bereitstellungsauflage 146. Ein dort abgesetztes Werkzeug 66 kann bis zu den Anschlägen 150 geschoben werden. Wenn das Werkzeug 66 dort mit dem Handhabungsabschnitt 132 zur Anlage kommt, befindet es sich in der ersten Übergabeposition 94. Das Werkzeug 66 ist bereit zur Übernahme durch die Werkzeugmitnahmeeinheit 120 des Werkzeugshuttles 90. In Fig. 8 ist durch einen Doppelpfeil 144 angedeutet, dass die Anschläge 150 beweglich sind.

Die Anschläge 150 sind an einem Körper 176 ausgebildet, auf den ein Vorspannelement 178 einwirkt. Das Vorspannelement 178 drängt den Anschlag 150 in Richtung auf die in Fig. 8 gezeigte Sperrstellung. In der Sperrstellung kann das Werkzeug 66 nicht translatorisch durch das Werkzeugshuttle 90 aus der ersten Übergabeposition 94 in die zweite Übergabeposition 96 bewegt werden, vergleiche den in den Figuren 5 und 7 gezeigten Verfahrweg 98. Um einen Anschlag 150 in die in Fig. 9 gezeigte Freigabestellung zu bringen, kann das Werkzeugshuttle 90 bei der Annäherung auf eine Steuerfläche 180 beim Körper 176 des Anschlags 150 einwirken. Wenn die Anschläge 150 die in Fig. 9 gezeigte Freigabestellung einnehmen, kann das Werkzeug 66 mit seiner Auflagefläche 134 über die Anschläge 150 hinweg gleiten.

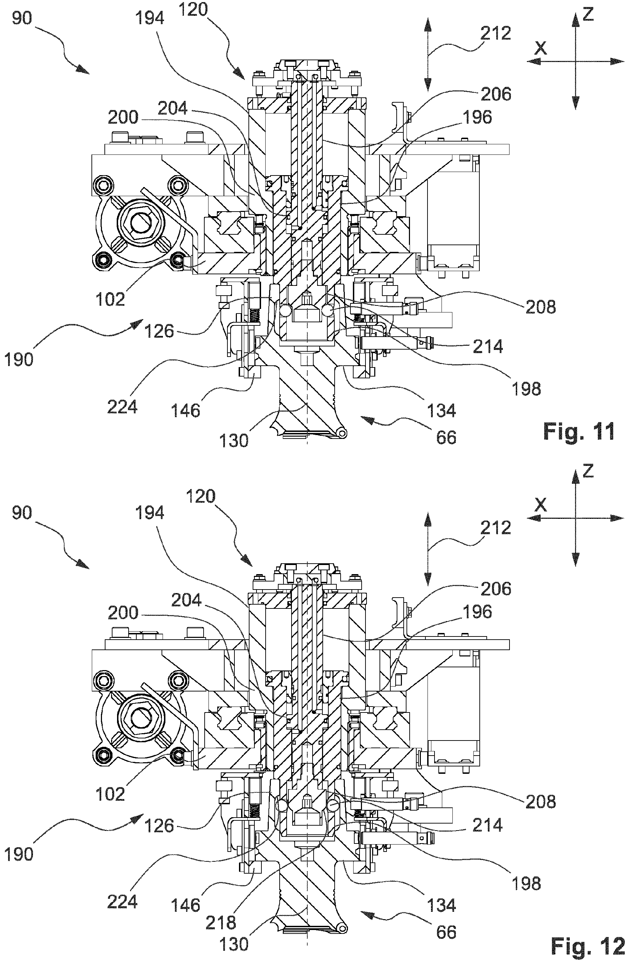

Mit ergänzender Bezugnahme auf die Figuren 10-13 wird die Gestaltung der Werkzeugmitnahmeeinheit 120 der Bestückungsvorrichtung 70 näher veranschaulicht. Die Figuren 10-12 zeigen jeweils ein Querschnitt durch ein Werkzeugshuttle 90 der Bestückungsvorrichtung 70, wobei unterschiedliche Stellungen der Werkzeugmitnahmeeinheit 120 in Bezug auf ein Werkzeug 66 gezeigt sind. Fig. 13 zeigt einen Längsschnitt durch ein Werkzeugshuttle 90 der Bestückungsvorrichtung 70. Die in Fig. 13 gezeigte Stellung entspricht derjenigen der Fig. 11.

Die Werkzeugmitnahmeeinheit 120 umfasst einen Greifmechanismus 190, der einen Führungszylinder 194 mit Führungskolben 196 aufweist. Am dem Werkzeug 66 zugewandten Ende des Führungskolbens 196 sitzt ein Führungselement 198, das zumindest abschnittsweise in den Hohlschaft 126 des Werkzeugs 66 einfahren kann. Der Führungskolben 196 sitzt in einem Mitnahmegehäuse 200, das am Grundkörper 102 des Werkzeugshuttles 90 befestigt ist. Der Greifmechanismus 190 umfasst ferner einen Sicherungszylinder 204 mit einem Sicherungskolben 206. Am dem Werkzeug 66 zugewandten Ende des Sicherungskolbens 206 sitzt ein Sicherungselement 208, das zumindest abschnittsweise in den Hohlschaft 126 des Werkzeugs 66 einfahren kann. Der Sicherungskolben 206 sitzt in einer Ausnehmung 210 im Führungskolben 196. Der Führungszylinder 194 und der Sicherungszylinder 204 bilden gemeinsam ein teleskopierbares Zylinderpaar.

Im Ausführungsbeispiel ist der Führungskolben 196 konzentrisch zur Längsachse 130 des Werkzeugs 66 angeordnet. Im Ausführungsbeispiel ist der Sicherungskolben 206 konzentrisch zur Längsachse 130 des Werkzeugs 66 angeordnet. Der Führungskolben 196 und der Sicherungskolben 206 sind parallel zur Längsachse 130 bzw. entlang der Längsachse 130 verfahrbar, vergleiche den Doppelpfeil 212. Der Führungskolben 196 ist relativ zum Mitnahmegehäuse 200 und damit relativ zum Grundkörper 102 des Werkzeugshuttles 90 verfahrbar. Der Führungskolben 196 und der Sicherungskolben 206 sind relativ zueinander verfahrbar. Ein Bewegungsbereich des Führungskolbens 196 wird durch das Mitnahmegehäuse 200 des Führungszylinders 194 definiert. Ein Bewegungsbereich des Sicherungskolbens 206 wird durch die Ausnehmung 210 im Sicherungszylinder 204 definiert.

Aufgrund der beträchtlichen vertikalen Erstreckung des Mitnahmegehäuses 200 ergibt sich für den Führungskolben 196 ein beträchtlicher Verfahrweg. Die vertikale Erstreckung der Ausnehmung 210 ist deutlich kleiner, so dass sich ein kleinerer Verfahrweg für den Sicherungskolben 206 ergibt. Bei der Bewegung des Führungskolbens 196 wird der Sicherungskolben 206 grundsätzlich mitbewegt. Die Bewegung des Sicherungskolbens 206 relativ zum Führungskolben 196 umfasst einen kleinen Offset-Hub.

Das Führungselement 198 und das Sicherungselement 208 wirken zusammen, um das Werkzeug 66 über seinen Hohlschaft 126 am Greifmechanismus 190 zu sichern. Der Greifmechanismus 190 umfasst zu diesem Zweck Rastelemente 214, die beispielsweise als Rastkugeln gestaltet sind. Die Rastelemente 214 sitzen zumindest abschnittsweise in Rastausnehmungen 216 im Führungselement 198. Das Sicherungselement 208 umfasst einen Verdrängungsabschnitt 218, der beispielsweise als Konus gestaltet ist. Der Verdrängungsabschnitt 218 kann die Rastelemente 214 radial nach außen drängen, wenn das Sicherungselement 208 bei der Bewegung des Sicherungskolbens 206 relativ zum Führungselement 198 in Richtung auf das Werkzeug 66 bewegt wird.

In der in Fig. 10 gezeigten Stellung ist der Greifmechanismus 190 mit dem Führungselement 198 und dem Sicherungselement 208 noch nicht in den Hohlschaft 126 des Werkzeugs 66 eingerückt. Im Hohlschaft 126 ist ein Rastabschnitt 224 ausgebildet, der eine durch eine Schulter gebildete Hinterschneidung umfasst. Am Rastabschnitt 224 können die Rastelemente 214 einrasten, wenn das Sicherungselement 208 mit dem Verdrängungsabschnitt 218 die Rastelemente 214 dort radial nach außen drängt.

In der in Fig. 11 gezeigten Stellung ist der Greifmechanismus 190 mit dem Führungselement 198 in den Hohlschaft 126 des Werkzeugs 166 eingefahren. Das Werkzeug 66 und das Führungselement 198 sind konzentrisch zueinander ausgerichtet. Das Werkzeug 166 ist jedoch noch nicht am Greifmechanismus 190 gesichert. Die Rastelemente 214 sind noch nicht durch den Verdrängungsabschnitt 218 nach außen in Richtung auf den Rastabschnitt 224 des Werkzeugs 66 verlagert.

Einen solchen Zustand zeigt Fig. 12. Dieser Zustand wird erreicht, indem der Sicherungskolben 206 relativ zum Führungskolben 196 weiter in Richtung auf das Werkzeug 66 verfahren wird. Dies bewirkt durch die damit einhergehende Verlagerung des Sicherungselements 208 und des Verdrängungsabschnitts 218 ein Einrücken der Rastelemente 214 in den Rastabschnitt 224. In diesem Zustand kann das Werkzeug 66 nicht vom Greifmechanismus 190 herunterfallen. Das Werkzeug 66 kann (gegebenenfalls durch leichten Hub) vom Bereitstellungsplatz 166 abgehoben und aus der ersten Übergabeposition 94 in Richtung auf die zweite Übergabeposition 98 durch das Werkzeugshuttle 90 zur Abgabe an ein Werkzeugmagazin 60 verfahren werden.

Der Führungszylinder 194 und der Sicherungszylinder 204 können fluidisch gesteuert werden, beispielsweise pneumatisch. Der Sicherungszylinder 204 bildet zusätzlich zum Führungszylinder 194 eine weitere Offset-Stufe, die die Verriegelung des Werkzeugs 66 ermöglicht. Das Werkzeug 66 ist sicher am Greifmechanismus 190 der Werkzeugmitnahmeeinheit 120 verrastet. Dies erfolgt im Ausführungsbeispiel durch einen Eingriff in den Hohlschaft 126 des Werkzeugs und durch dortiges Verrasten. Daher steht der Handhabungsabschnitt 132 des Werkzeugs 66 für weitere Handhabungsoperationen zur Verfügung. Beispielsweise kann das Werkzeug 66 mit der Handhabungsnut 136 des Handhabungsabschnitts 132 in einem Magazinplatz 64 eines Werkzeugmagazins 60 abgesetzt werden.

Fig. 13 veranschaulicht anhand eines Längsschnitts das Zusammenwirken des Greifmechanismus 190 mit dem Ausleger 166 mit der Positionsüberwachungseinheit 170 und dem zumindest einen Näherungssensor 168, vergleiche hierzu auch Fig. 7 und Fig. 14. Der Ausleger 166 ist im Ausführungsbeispiel an einem vom Werkzeug 66 abgewandten Ende des Sicherungskolbens 206 angeordnet. Der Sicherungskolben 206 wird mit verfahren, wenn der Führungskolben 196 bewegt wird. Somit kann über den Näherungssensor 170 auch die Position des Führungskolbens 196 erfasst und überwacht werden. Die Relativbewegung zwischen dem Sicherungskolben 206 und dem Führungskolben 196 erfolgt beispielsweise nach der Bewegung des Führungskolbens 196 in Bezug auf das Mitnahmegehäuse 200 des Führungszylinders 194. Bei einer Fehlstellung zwischen dem Sicherungskolben 194 und den Führungskolben 196 würde das Führungselement 198 gegebenenfalls gar nicht erst in den Hohlschaft 126 des Werkzeugs 66 einfahren können. Insgesamt können somit beide Bewegungen mit nur einem Näherungssensor 170 überwacht werden.

Beim Führungszylinder 194 und beim Sicherungszylinder 204 handelt es sich beispielsweise um doppeltwirkende Zylinder. Ausgehend von der in Fig. 13 gezeigten Stellung des Greifmechanismus 190 kann das Werkzeug 66 an der Werkzeugmitnahmeeinheit 120 verrastet werden. Sodann kann das Werkzeug 66 bedarfsweise ein Stück von der Bereitstellungsauflage 146 abgehoben werden. In der in Fig. 13 gezeigten Stellung ist das Werkzeugshuttle 90 in der ersten Übergabeposition 94. Somit hat das Werkzeugshuttle 90 den Anschlag 150 in die Freigabestellung gebracht. Das Werkzeug 66 kann den Anschlag 150 bei seiner Bewegung in Richtung auf die zweite Übergabeposition 96 überwinden.

Fig. 14 zeigt das Werkzeugshuttle 90 in einem von weiteren Komponenten der Bestückungsvorrichtung 70 gelösten Zustand. Im Ausführungsbeispiel sind am Grundkörper 102 zwei Schiebestücke 234 vorgesehen, die dazu ausgebildet sind, bei der Bewegung des Werkzeugshuttles 90 in Richtung auf die erste Übergabeposition 94 die Steuerflächen 180 der Anschläge 150 zu kontaktieren und zu verdrängen. Auf diese Weise können die Anschläge 150 durch das Werkzeugshuttle 90 gegen die Kraft des Vorspannelements 178 aus der Sperrposition in die Freigabeposition gebracht werden, vergleiche wiederum Fig. 8 und Fig. 9.

Fig. 14 zeigt ferner zwei Orientierungshilfen 236, die die Relativorientierung der Ausnehmungen 128 beim Hohlschaft 126 des Werkzeugs 66 gewährleisten. Die Orientierungshilfen 236 sind im Ausführungsbeispiel am Führungskolben 196 angeordnet.

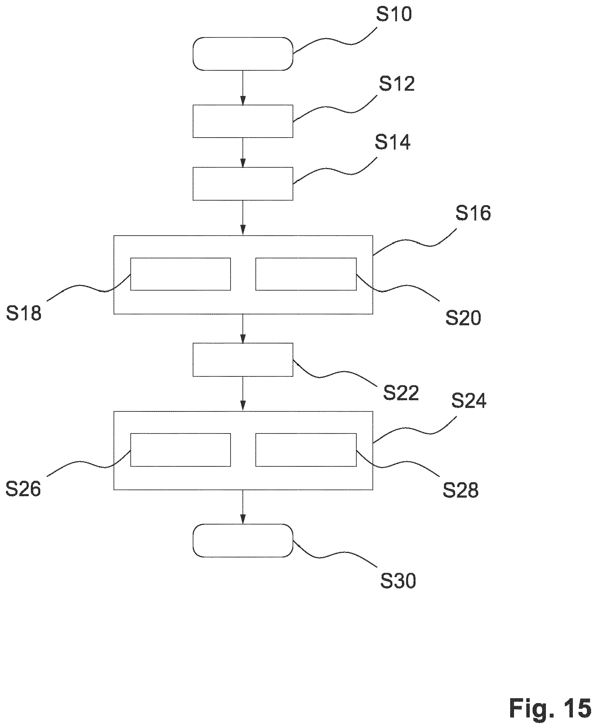

Fig. 15 veranschaulicht anhand eines schematischen Blockdiagramms eine beispielhafte Ausgestaltung eines Verfahrens zum Einschleusen oder Ausschleusen von Werkzeugen bei einer Werkzeugmaschine gemäß zumindest einer der hierin beschriebenen Ausgestaltungen. Das Verfahren startet im Ausführungsbeispiel bei einem Schritt S10.

In einem Schritt S12 erfolgt ein Einsetzen eines Werkzeugs in den Bereitstellungsplatz der Bestückungsvorrichtung. Dies kann händisch durch einen Bediener erfolgen. Das Werkzeug kann am Bereitstellungsplatz bereits günstig für die Übernahme durch die Werkzeugmitnahmeeinheit ausgerichtet werden.

Ein Schritt S14 umfasst das Positionieren des Werkzeugshuttles in der ersten Übergabeposition, in der das Werkzeug bereitsteht. Beispielsweise ist die Werkzeugmitnahmeeinheit mit Greifmechanismus konzentrisch zur Längsachse eines bereitgestellten Werkzeugs ausgerichtet.

Ein Schritt S16 umfasst ein Greifen des Werkzeugs durch den Greifmechanismus. Dies umfasst in einem Teilschritt S18 eine Bewegung des Führungselements (gemeinsam mit dem Sicherungselement), beispielsweise in den Hohlschaft des Werkzeugs hinein. Ferner erfolgt in einem Teilschritt S20 eine Bewegung des Sicherungselements relativ zum Führungselement, um das Werkzeug am Greifmechanismus zu verriegeln. Üblicherweise folgt der Teilschritt S20 nach dem Teilschritt S18.

Es schließt sich ein Schritt S22 an, der ein Verfahren des Werkzeugshuttles aus der ersten Übergabeposition hin zur zweiten Übergabeposition umfasst. Dort steht ein leerer Magazinplatz im Werkzeugmagazin bereit, an den das Werkzeug abgegeben werden kann. In einer beispielhaften Ausgestaltung ist das Werkzeug daher bereits hinreichend im Werkzeugmagazin gesichert, wenn das Werkzeugshuttle die zweite Übergabeposition erreicht hat. Dies erfolgt beispielsweise über die Handhabungsnut am Handhabungsabschnitt des Werkzeugs, die vom Greifmechanismus nicht belegt ist.

Ein Schritt S24 umfasst eine Abgabe des Werkzeugs und ein Lösen des Greifmechanismus. Dies umfasst einen Teilschritt S26, in dem das Sicherungselement relativ zum Führungselement bewegt wird, um die gesicherte Stellung des Werkzeugs zu entriegeln. Sodann kann sich ein Teilschritt S28 anschließen, in dem das Führungselement (gemeinsam mit dem Sicherungselement) aus dem Hohlschaft des Werkzeugs heraus bewegt wird. Danach kann das Werkzeugshuttle aus der zweiten Übergabeposition weg bewegt werden.

Das Verfahren endet im Ausführungsbeispiel bei einem Schritt S30. Insbesondere kann das Verfahren rückwärts durchlaufen werden, um Werkzeuge aus einem Werkzeugmagazin auszuschleusen. Es versteht sich, dass das Verfahren auch Schritte umfassen kann, die ein Umsortieren von Werkzeugen im Werkzeugmagazin unter Nutzung der Werkzeugspindel umfassen. Dies bietet sich auch dann an, wenn mehrere Werkzeugmagazine vorgesehen sind, die für die Werkzeugspindel erreichbar sind.

## Patentansprüche

1. Bestückungsvorrichtung (70) für eine Werkzeugmaschine (10), insbesondere für ein Werkzeugmagazin (60) einer Werkzeugmaschine (10), wobei die Bestückungsvorrichtung (70) Folgendes aufweist:
- ein Werkzeugshuttle (90), das zwischen einer ersten Übergabeposition (94) und einer zweiten Übergabeposition (96) verfahrbar ist,
- einen Bereitstellungsplatz (144), insbesondere einen von außen zugänglichen Bereitstellungsplatz (144), zur Einbringung oder Entnahme eines Werkzeugs (66), wobei der Bereitstellungsplatz (144) für das Werkzeugshuttle (90) in der ersten Übergabeposition (94) erreichbar ist,
wobei das Werkzeugshuttle (90) dazu ausgebildet ist, ein Werkzeug (66) zwischen dem Bereitstellungsplatz (144) und einem Magazinplatz (64) eines Werkzeugmagazins (60) auszutauschen, wobei der Magazinplatz (64) für das Werkzeugshuttle (90) in der zweiten Übergabeposition (96) erreichbar ist, und
- eine dem Werkzeugshuttle (90) zugeordnete Werkzeugmitnahmeeinheit (120) mit zumindest einem Greifmechanismus (190), der dazu ausgebildet ist, ein zu transferierendes Werkzeug (66) zu greifen und am Werkzeugshuttle (90) zu sichern,
wobei der Greifmechanismus (190) ein relativ zu einem Grundkörper (102) des Werkzeugshuttles (90) verfahrbares Führungselement (198) und ein relativ zum Führungselement (198) verfahrbares Sicherungselement (208) aufweist, und
wobei zumindest das Führungselement (198) parallel zu einer Längsachse (130) des Werkzeugs (66) verfahrbar ist.

2. Bestückungsvorrichtung (70) nach Anspruch 1,
wobei das Führungselement (198) dazu ausgebildet ist, in einen Hohlschaft (126) des Werkzeugs (66) einzufahren, um ein Werkzeug (66) aufzunehmen.

3. Bestückungsvorrichtung (70) nach Anspruch 1 oder 2,
wobei das Sicherungselement (208) relativ zum Führungselement (198) verfahrbar ist, um ein gegriffenes Werkzeug (66) formschlüssig oder kraftschlüssig am Führungselement (198) zu sichern.

4. Bestückungsvorrichtung (70) nach Anspruch 3,
wobei das Sicherungselement (208) parallel zur Längsachse (130) des Werkzeugs (66) relativ zum Führungselement (198) verfahrbar ist, um zumindest ein Rastelement (208) in zumindest einen Rastabschnitt (224) des Werkzeugs (66) einzurücken.

5. Bestückungsvorrichtung (70) nach einem der Ansprüche 1-4,
wobei das Führungselement (198) Bestandteil eines Führungszylinders (194) ist, der am Grundkörper (102) angeordnet ist, und/oder wobei das Sicherungselement (208) Bestandteil eines Sicherungszylinders (204) ist, der mit dem Führungselement (198) gekoppelt ist.

6. Bestückungsvorrichtung (70) nach einem der Ansprüche 1-5,
wobei zumindest das Führungselement (198) oder das Sicherungselement (208) Bestandteil eines in einem Mitnahmegehäuse (200) parallel zur Längsachse (130) des Werkzeugs (66) verfahrbaren Kolbens ist.

7. Bestückungsvorrichtung (70) nach Anspruch 6,
wobei das Führungselement (198) bei einem dem Werkzeug (66) zugewandten Ende eines Führungskolbens (196) ausgebildet ist, und wobei das Führungselement (198) insbesondere bei einem gegriffenen Werkzeug (66) konzentrisch zur Längsachse (130) des Werkzeugs (66) ausgerichtet ist.

8. Bestückungsvorrichtung (70) nach Anspruch 6 oder 7,
wobei das Sicherungselement (208) bei einem dem Werkzeug (66) zugewandten Ende eines Sicherungskolbens (206) ausgebildet ist, und wobei das Sicherungselement (208) insbesondere konzentrisch zum Führungselement (198) ausgerichtet ist.

9. Bestückungsvorrichtung (70) nach Anspruch 8,
wobei der Sicherungskolben (206) mit seinem vom Werkzeug (66) abgewandten Ende den Führungskolben (196) durchragt, wobei das vom Werkzeug (66) abgewandte Ende des Sicherungskolbens (206) einen Ausleger (166) aufweist, der mit einer am Grundkörper (102) angeordneten Positionsüberwachungseinheit (168) zusammenwirkt, und wobei die Positionsüberwachungseinheit (168) insbesondere dazu ausgebildet ist, über den Ausleger (166) eine Position des Führungskolbens (196) und eine Position des Sicherungskolbens (206) zu erfassen.

10. Bestückungsvorrichtung (70) nach einem der Ansprüche 1-9,
wobei die Werkzeugmitnahmeeinheit (120) gemeinsam mit dem Werkzeugshuttle (90) zwischen der ersten Übergabeposition (94) und der zweiten Übergabeposition (96) verfahrbar ist.

11. Bestückungsvorrichtung (70) nach einem der Ansprüche 1-10,
wobei das Werkzeug (66) am Bereitstellungsplatz (144) mit einem Handhabungsabschnitt (132) auf einer stationären Bereitstellungsauflage (146) ruht, und/oder wobei das Werkzeug (66) im Werkzeugmagazin (60) im Magazinplatz (64) über den Handhabungsabschnitt (132) gehalten ist.

12. Bestückungsvorrichtung (70) nach einem der Ansprüche 1-11,
wobei am Bereitstellungsplatz (144) zumindest eine mechanische Orientierungshilfe (154) zur Gewährleistung einer Drehorientierung eines eingelegten Werkzeugs (66) oder zumindest ein Näherungssensor (158) zur Erfassung eines eingelegten Werkzeugs (66) angeordnet ist, und/oder
wobei am Bereitstellungsplatz (144) zumindest ein Anschlag (150) für ein in der ersten Übergabeposition (94) bereitgestelltes Werkzeug (66) vorgesehen ist, und wobei der Anschlag (150) durch das Werkzeugshuttle (90) aus einer Sperrposition in eine Freigabeposition bringbar ist.

13. Werkzeugmaschine (10), die Folgendes aufweist:
- ein Gestell (12),
- zumindest eine Werkstückauflage (26),
- zumindest eine Werkzeugspindel (20), die relativ zur Werkstückauflage (26) verfahrbar ist,
- zumindest ein der Werkzeugspindel (20) zugeordnetes Werkzeugmagazin (60) zur Bereitstellung einer Mehrzahl von Werkzeugen (66), die insbesondere durch die Werkzeugspindel (20) im Pick-up-Verfahren greifbar sind, und
- zumindest eine Bestückungsvorrichtung (70) nach einem der Ansprüche 1-12, mit der Werkzeuge (66) in das Werkzeugmagazin (60) eingebracht oder aus dem Werkzeugmagazin (60) entnommen werden können,
wobei der Bereitstellungsplatz (144) der Bestückungsvorrichtung (70) zum Einschleusen oder Ausschleusen von Werkzeugen (66) zugänglich ist.

14. Werkzeugmaschine (10) nach Anspruch 13, umfassend ein erstes Werkzeugmagazin (60) und ein zweites Werkzeugmagazin (60), und genau eine Bestückungsvorrichtung (70), wobei die Bestückungsvorrichtung (70) funktional mit dem ersten Werkzeugmagazin (60) zum Einschleusen oder Ausschleusen von Werkzeugen (66) gekoppelt ist, und wobei die Werkzeuge (66) durch die zumindest eine Werkzeugspindel (20) zwischen dem ersten Werkzeugmagazin (60) und dem zweiten Werkzeugmagazin (60) transferierbar sind.

15. Verfahren zum Einschleusen oder Ausschleusen von Werkzeugen bei einer Werkzeugmaschine (10) nach Anspruch 13 oder 14, umfassend die folgenden Schritte:
- Einsetzen eines Werkzeugs (66) in den Bereitstellungsplatz (144),
- Positionieren des Werkzeugshuttles (90) in der ersten Übergabeposition (94), so dass das Werkzeug (66) für die Werkzeugmitnahmeeinheit (120) erreichbar ist,
- Steuerung der Werkzeugmitnahmeeinheit (120) zur Bewegung des Führungselements (198) und des Sicherungselements (208), um das Werkzeug (66) zu greifen und am Werkzeugshuttle (90) zu sichern,
- Verfahren des Werkzeugshuttles (90) in die zweite Übergabeposition (96), in der ein Magazinplatz (64) des Werkzeugmagazins (60) bereitsteht, und
- Übergabe des Werkzeugs (66) an den Magazinplatz (64) des Werkzeugmagazins (60), umfassend eine Bewegung des Führungselements (198) und des Sicherungselements (208).
